# EUROPÄISCHE PATENTSCHRIFT

(11) **EP 0 886 820 B1**
(45) Veröffentlichungstag und Bekanntmachung des Hinweises auf die Patenterteilung: **23.08.2000**
(21) Anmeldenummer: 97916345.8
(22) Anmeldetag: 13.03.1997
(51) Int. Cl.: G06F 1/18

(54) **FRONTSEITIGE ABDECKUNG FÜR EIN RECHNERGEHÄUSE**
FRONT COVERING FOR A COMPUTER HOUSING
ELEMENT DE RECOUVREMENT AVANT POUR BOITIER D'ORDINATEUR

(30) Priorität: 14.03.1996 DE 29604776 U
(43) Veröffentlichungstag der Anmeldung: 30.12.1998
(73) Patentinhaber: Siemens Nixdorf Informationssysteme AG, 33106 Paderborn (DE)
(72) Erfinder: LANZ, Michael, D-81669 München (DE); JERG, Jürgen, D-86937 Scheuring (DE); SCHERER, August, D-86424 Dinkelscherben (DE)
(74) Vertreter: Epping, Wilhelm, Dr.-Ing.
(86) Internationale Anmeldenummer: DE9700499
(87) Internationale Veröffentlichungsnummer: WO9734217

(56) Entgegenhaltungen:
- EP-A- 0 647 897
- EP-A- 0 687 970
- US-A- 5 327 683
- IBM TECHNICAL DISCLOSURE BULLETIN, Bd. 37, Nr. 8, 1.August 1994, Seiten 627-630, XP000456547 "PERSONAL COMPUTER MECHANICAL PACKAGE"

## Beschreibung

Die Erfindung betrifft eine frontseitige Abdeckung für ein Rechnergehäuse nach den Merkmalen des Oberbegriffs des Anspruchs 1.

Die Vorderseite von Rechnergehäusen ist üblicherweise mit einer aus Kunststoff bestehenden Frontblende abgedeckt. In dieser Frontblende sind unter anderem Aussparungen für die Einbauplätze von Speicherlaufwerken vorgesehen, ferner ein Sperrschloß, Drucktasten zur Ein- und Ausschaltung, Signallampen, gegebenenfalls ein LCD-Anzeigeelement und vieles mehr.

Mit den zunehmenden Einsatzmöglichkeiten eines Pesonalcomputers, insbesondere im Multimedia-Bereich, sind eine Reihe von Zusatzkomponenten hinzugekommen, für deren Anschlußelemente auf der Frontblende vielfach kein ausreichender Platz zur Verfügung steht. Um den jeweiligen Kundenwünschen in Bezug auf diese Zusatzkomponenten ausreichend gerecht zu werden, müßte an sich ein möglichst umfassendes Angebot zur Verfügung gestellt werden. Andererseits wäre auch aus Platzgründen einer individuellen Bestückung der Vorzug zu geben. Dies würde aber dann zwangsläufig voraussetzen, daß die Frontblende je nach Ausstattung des Personalcomputers unterschiedlich gestaltet werden müßte, ein Aufwand, der angesichts der hohen Werkzeugkosten an sich nicht gerechtfertigt werden kann.

Aus US 5 327 683 A ist eine frontseitige Abdeckung für ein Rechnergehäuse bekannt, die als rahmenförmige Frontblende ausgebildet ist, wobei in diese rahmenförmige Frontblende einzelne Wandelemente lösbar einsetzbar sind.

Ferner sind aus EP 687 970 A und EP 647 897 A Rechnergehäuse mit aufsetzbaren Frontblenden bekannt, wobei die Vorderseite je nach gewünschter Zubehörausstattung unterschiedlich gestaltet ist und darauf eine entsprechend unterschiedliche Frontblende aufgesetzt wird.

Der vorliegenden Erfindung liegt nun die Aufgabe zugrunde, eine frontseitige Abdeckung für ein Rechnergehäuse anzugeben, die es ermöglicht, die Frontblende mit möglichst einfachen Mitteln an die.unterschiedliche Ausstattung des Rechners anzupassen.

Diese Aufgabe wird ausgehend von einer frontseitigen Abdekkung für ein Rechnergehäuse der eingangs genannten Art durch die Merkmale des Anspruchs 1 gelöst.

Vorteilhafte Weiterbildungen der Erfindung sind in Unteransprüchen angegeben.

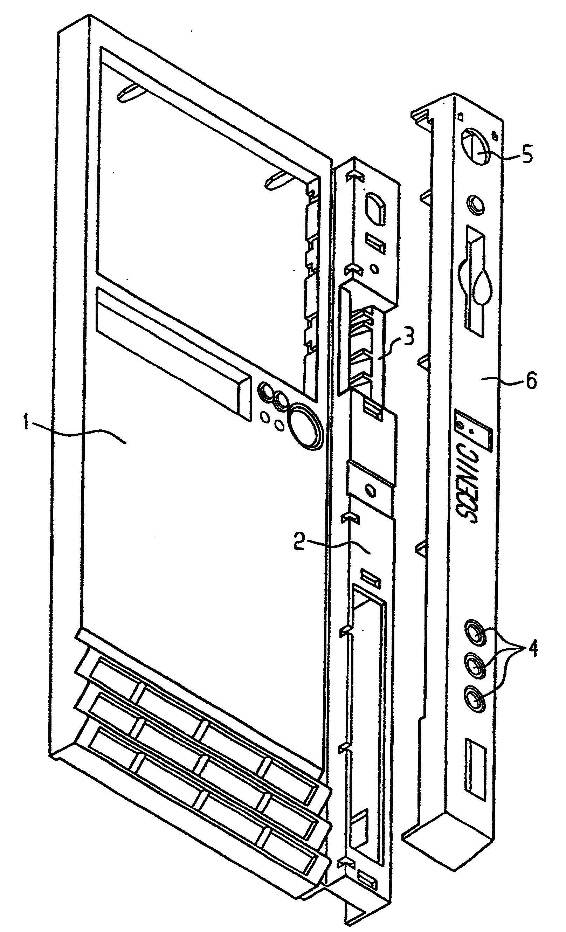

Im folgenden wird ein Ausführungsbeispiel der Erfindung anhand der Zeichnung näher erläutert.

Die Figur zeigt in perspektivischer Darstellung eine auf die Frontseite eines Computergehäuses (z.B. Towerbauweise) aufsetzbare Frontblende 1, die im oberen Bereich eine rechteckige Aussparung für den Einbau von Speicherlaufwerken aufweist. Diese Einbauplätze sind gegebenenfalls mittels einer Schieberblende gegen unberechtigten Zugriff gesichert. Ferner sind in der Frontblende Drucktasten, Signallampen und gegebenenfalls ein LCD-Anzeigeelement eingebaut. An einer der beiden Längskanten der Frontblende 1 ist eine Funktionsleiste 2 angeformt, die wahlweise mit mehreren anwendungsspezifischen Zubehörbaugruppen, wie Chipkartenleser 3, Steckeranschlüssen, Anschlußbuchsen 4 oder dergleichen, belegbar ist. Anstelle der Anschlußbuchsen 4 für Lautsprecher, Kopfhörer oder Mikrophon, kann beispielsweise auch ein Infrarot-Empfänger für die Fernbedienung des im Multimedia-Betrieb arbeitenden Personalcomputers vorgesehen werden. Auch ein normalerweise in der Frontblende 1 vorgesehenes Sperrschloß 5 kann in der Funktionsleiste 2 untergebracht werden. Zur Abdeckung der einzelnen Komponenten innerhalb der Funktionsleiste 2 ist eine haubenartig übergreifende Multifunktionsblende 6 vorgesehen, die in ihrer individuellen Formgebung der jeweils gewählten Belegung innerhalb der Funktionsleiste 2 angepaßt ist. Bei einer Nachrüstung oder Umrüstung von Komponenten innerhalb der Funktionsleiste 2 braucht dann nur die bisher verwendete Multifunktionsblende gegen eine neue, entsprechend angepaßte Multifunktionsblende ausgetauscht zu werden. Die größere Frontblende 1 kann dagegen unverändert weiterverwendet werden.

Die Multifunktionsblende ist zweckmäßig mittels Rastelementen an der Funktionsleiste lösbar befestigt. Außerdem kann an der zur Frontblende 1 weisenden Innenfläche der Multifunktionsblende eine Aussparung bzw. ein Führungsschlitz zur seitlichen Führung einer vor die Speicherlaufwerke bewegbaren Schieberblende vorgesehen werden.

## Patentansprüche

1. Frontseitige Abdeckung für ein Rechnergehäuse in Desktop- oder Towerausführung, unter Verwendung einer Frontblende mit mehreren Einbauplätzen für von außen zugängliche Speicherlaufwerke,
**dadurch gekennzeichnet,**
daß an wenigstens einer Seitenkante der Frontblende (1) eine Funktionsleiste (2) vorgesehen ist, daß diese Funktionsleiste (2) wahlweise mit mehreren, anwendungsspezifischen Zubehör-Baugruppen, Steckeranschlüssen, Anschlußbuchsen, Infrarot-Empfänger, oder dergleichen belegbar ist, und daß auf diese Funktionsleiste (2) eine der jeweiligen Belegung angepaßte Multifunktionsblende (6) aufsetzbar ist.

2. Frontseitige Abdeckung nach Anspruch 1,
**dadurch gekennzeichnet,**
daß die Maltifunktionsblende (6) durch Rastelemente an der Funktionsleiste lösbar befestigt ist.

3. Frontseitige Abdeckung nach Anspruch 1 oder 2,
**dadurch gekennzeichnet**,
daß die Multifunktionsblende (6) an der zur Frontblende weisenden Innenfläche einen Führungsschlitz bzw. eine Aussparung für eine die Frontblende (1) im Bereich der Speicherlaufwerke abdeckende Schieberblende aufweist.

## Claims

1. Front cover for a computer housing of desktop or tower design, using a front panel having a number of installation locations for externally accessible disk drives, characterized in that a function strip (2) is provided on at least one side edge of the front panel (1), in that this function strip (2) can be equipped optionally with a number of application-specific accessory modules, plug connections, connection sockets, infrared receivers or the like, and in that a multifunctional panel (6), matched to the respective equipment, can be fitted onto this function strip (2).

2. Front cover according to Claim 1, characterized in that the multifunctional panel (6) is detachably mounted on the function strip by means of latching elements.

3. Front cover according to Claim 1 or 2, characterized in that the multifunctional panel (6) has, on the inner face pointing towards the front panel, a guide slot or a recess for a sliding panel covering the front panel (1) in the region of the disk drives.

## Revendications

1. Revêtement de face avant pour un boîtier d'ordinateur en réalisation Desktop ou en tour, avec utilisation d'un panneau avant comportant plusieurs emplacements d'installation pour des unités de disque de mémoire accessibles de l'extérieur,
caractérisé en ce qu'il est prévu sur au moins un bord latéral du panneau (1) avant une barrette (2) fonctionnelle, en ce que cette barrette (2) fonctionnelle peut être occupée au choix par plusieurs modules accessoires spécifiques à une application, des raccordements à fiche, des douilles de raccordement, des récepteurs infrarouges ou analogues, et en ce qu'un panneau (6) multifonctionnel adapté à la façon dont la place est occupée peut être posé sur cette barrette (2) fonctionnelle.

2. Revêtement de face avant suivant la revendication 1, caractérisé en ce que le panneau (6) multifonctionnel est fixé de manière amovible à la barrette fonctionnelle par des éléments d'encliquetage.

3. Revêtement de face avant suivant la revendication 1 ou 2, caractérisé en ce que le panneau (6) multifonctionnel comporte sur la face intérieure tournée vers le panneau avant une fente de guidage ou un évidement pour un panneau coulissant recouvrant le panneau (1) avant dans la zone des unités de disque de mémoire.
